# DEMANDE DE BREVET EUROPEEN

(11) **EP 0 841 476 A1**
(43) Date de publication de la demande: **13.05.1998**
(21) Numéro de dépôt: 96420325.1
(22) Date de dépôt: 06.11.1996
(51) Int. Cl.: F02C 6/08, F02C 7/26

(54) **Alimentation en air comprimé par une turbine à gaz à base d'une turbosoufflante**

(71) Demandeur: Ets Cornut S.A., 43290 Montfaucon en velay (FR)
(72) Inventeur: Cornut, Alain, 43290 Montefaucon (FR); Cornut, Gérard, 42100 Saint Etienne (FR)
(74) Mandataire: Dupuis, François

(57) **Abrégé**

Ce dispositif est remarquable en ce qu'il est composé essentiellement d'un turbo compresseur alimenté par une énergie appropriée et un fluide moteur chauffé, du type équipant les moteurs diesel suralimentés, d'un ensemble de combustion compact (13) intégrant tous les moyens nécessaires au fonctionnement, et d'une centrale hydraulique (5) reliée à un palier fluide (4) du turbo compresseur

## Description

L'objet de l'invention se rattache au secteur technique des moyens de compression d'air pour installations mobiles ou fixes.

Les appareils utilisés actuellement pour alimenter en air comprimé les ensembles destinés à véhiculer des produits pulvérulents sont du type à vis ou à palettes. Ces appareils sont lourds, encombrants, nécessitent une installation relativement complexe et sont soumis à des contraintes de frottements et d'usure mécanique importantes.

C'est pour remédier à ces inconvénients et améliorer de manière notable les performances de ce genre d'appareil que l'on a conçu le dispositif selon l'invention.

A cet effet, et selon une première caractéristique, le dispositif d'obtention d'air comprimé est composé essentiellement d'un turbo compresseur du type équipant les moteurs diesel suralimentés, d'un ensemble de combustion compact intégrant tous les moyens nécessaires au fonctionnement, et d'une centrale hydraulique reliée à un palier fluide du turbo compresseur.

Ces caractéristiques et d'autres encore ressortiront de la description qui suit supportée par le schéma d'un exemple de dispositif selon une forme de réalisation.

Le dispositif comprend un turbo compresseur référencé dans son ensemble par (1), du type équipant les moteurs diesel suralimentés, c'est-à-dire comprenant une turbine (2) entraînant un compresseur centrifuge (3) par l'intermédiaire d'un palier fluide (4) alimenté par une centrale hydraulique classique (5).

L'air admis dans le compresseur centrifuge est dépollué par un filtre (6), tandis qu'en sortie, l'air comprimé est dirigé pour une part vers la turbine (2) par des ajutages fixes ou réglables à commande automatique ou manuelle (7), et pour l'autre part dans un réservoir de servitude sous pression (8) après avoir été épuré, par un filtre (9). La pression de l'air comprimé dirigé vers le réservoir est contrôlée par une valve (10) et celle dirigée vers la turbine est contrôlée par une valve (11). Des clapets anti-retour (12) sont prévus de part et d'autre des ajutages (7) pour la phase démarrage que l'on décrira plus loin.

L'énergie d'entrainement du turbo compresseur (1) est ici assurée par un ensemble de combustion référencé dans son ensemble par (13) et comprenant un moteur électrique (14) entraînant sur le même arbre une pompe à gas-oil (15) et une turbine de démarrage (16) permettant d'amorcer le cycle. L'ensemble de combustion comprend encore une chambre (17) équipée d'un allumeur (18), d'un gicleur (19) et d'une valve (20) de contrôle de la pression dans la chambre.

Le gas-oil est aspiré dans un réservoir (21), passe par un filtre (22) avant d'aller dans la pompe (15) reliée au gicleur (19) par une valve (23) de contrôle du débit de gas-oil.

Un clapet (24) et un filtre (25) assure l'alimentation en air de la chambre de combustion (17) lors du démarrage du dispositif qui peut être obtenu par différents mécanismes tels que : mécanique (volant d'inertie), pneumatique, (réserve d'air) hydraulique haute ou basse pression, électrique (par moteur) ou autres moyens comportant un ou plusieurs des éléments précités.

Le dispositif décrit utilise l'air chauffé au gas-oil comme fluide moteur, mais ce dernier peut être obtenu également par le gaz, la vapeur, les liquides.

De même les sources d'énergie pour chauffer ce fluide peuvent être l'électricité (par résistances), le gaz ou autres combustibles appropriés.

Le dispositif compact ainsi réalisé permet d'obtenir économiquement des grands volumes d'air comprimé avec une fiabilité supérieure à celle des compresseurs à vis ou à palettes et un entretien pratiquement nul du fait qu'il n'y a pas de frottement ni d'usure mécanique.

Le dispositif peut être à poste fixe ou embarqué sur n'importe quel type de moyen de transport terrestre, maritime ou aérien, une application particulièrement visée se situe dans le transport de produits pulvérulents sur véhicules

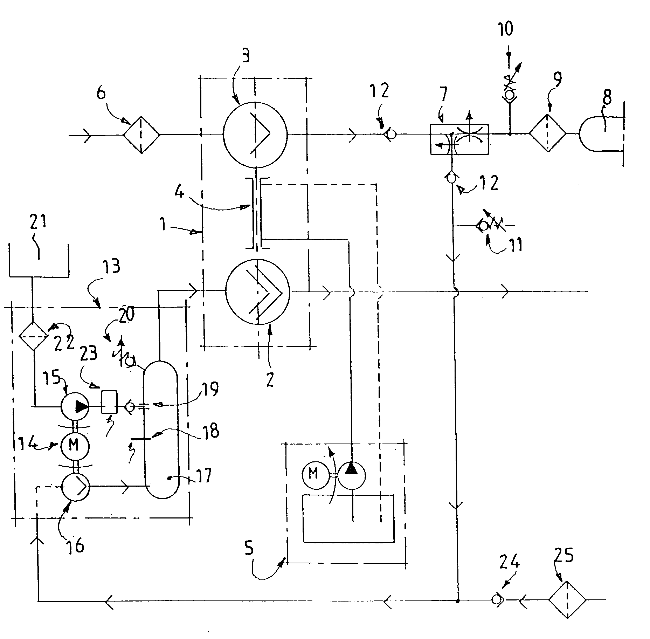

## Revendications

1. Dispositif d'obtention d'air comprimé pour usage divers caractérisé en ce qu'il est composé essentiellement d'un turbo compresseur alimenté par une énergie appropriée et un fluide moteur chauffé, du type équipant les moteurs diesel suralimentés, d'un ensemble de combustion compact (13) intégrant tous les moyens nécessaires au fonctionnement, et d'une centrale hydraulique (5) reliée à un palier fluide (4) du turbo compresseur

2. Dispositif selon la revendication 1, caractérisé en ce que l'air dépollué traversant le turbo compresseur (1) par son compresseur centrifuge (3) est dirigé ensuite pour une part vers une turbine (2) du turbo compresseur, et pour l'autre part dans un réservoir de servitude sous pression (8), par des ajutages (7), la pression de l'air étant contrôlée par des valves (10) et (11) et des clapets anti-retour (12) sont placés de part et d'autre des ajutages.

3. Dispositif selon la revendication 2, caractérisé en ce que les ajutages de répartition (7) sont fixes.

4. Dispositif selon la revendication 2 caractérisé en ce que les ajutages de répartition (7) sont réglables.

5. Dispositif selon la revendication 4, caractérisé en ce que le réglage des ajutages de répartition (7) est manuel.

6. Dispositif selon la revendication 4, caractérisé en ce que le réglage des ajutages de répartition (7) est automatique.

7. Dispositif selon la revendication 1, caractérisé en ce que la source d'énergie d'alimentation du turbo compresseur (1) est le fuel.

8. Dispositif selon la revendication 1, caractérisé en ce que la source d'énergie d'alimentation du turbo-compresseur (1) est le gaz.

9. Dispositif selon la revendication 1, caractérisé en ce que la source d'énergie d'alimentation du turbo-compresseur (1) est l'électricité.

10. Dispositif selon les revendications 1 et 7 ensemble, caractérisé en ce que l'ensemble de combustion (13) comprend un moteur électrique (14) entraînant sur le même arbre une pompe à gas-oil (15) recevant le carburant depuis un réservoir (21) et un filtre (22) et une turbine de démarrage (16), ainsi qu'une chambre (17) équipée d'un allumeur (18), d'un gicleur (19) relié à la pompe (15) par une valve (23) et d'une valve (20) de contrôle de la pression dans la chambre.

11. Dispositif selon la revendication 10, caractérisé en ce que lors du démarrage un clapet (24) et un filtre (25) assurent l'alimentation en air de la chambre de combustion (17).

12. Dispositif selon la revendication 11 caractérisé en ce que le démarrage de l'ensemble est obtenu par un moyen mécanique du type volant d'inertie.

13. Dispositif selon la revendication 11, caractérisé en ce que le démarrage de l'ensemble est obtenu par un moyen pneumatique du type réserve d'air.

14. Dispositif selon la revendication 11, caractérisé en ce que le démarrage de l'ensemble est obtenu par un moyen hydraulique haute ou basse pression.

15. Dispositif selon la revendication 11, caractérisé en ce que le démarrage de l'ensemble est obtenu par un moyen électrique du type moteur.

16. Dispositif selon l'une quelconque des revendications 12 à 15, caractérisé en ce que le démarrage de l'ensemble est obtenu par un ou plusieurs des moyens précités.

17. Dispositif selon la revendication 1 caractérisé en ce que le fluide moteur d'alimentation du turbo compresseur (1) est un gaz.

18. Dispositif selon la revendication 1, caractérisé en ce que le fluide moteur d'alimentation du turbo compresseur (1) est de la vapeur.

19. Dispositif selon la revendication 1, caractérisé en ce que le fluide moteur d'alimentation du turbo compresseur (1) est un liquide.
